# EUROPÄISCHE PATENTSCHRIFT

(11) **EP 3 293 097 B1**
(45) Veröffentlichungstag und Bekanntmachung des Hinweises auf die Patenterteilung: **13.10.2021**
(21) Anmeldenummer: 17169179.3
(22) Anmeldetag: 03.05.2017
(51) Int. Cl.: B62D 55/04, B62D 55/06, B62D 55/08, B62D 55/084

(54) **VERSTEIFUNG FÜR EIN FAHRWERK FÜR EINE SELBSTFAHRENDE ERNTEMASCHINE**
REINFORCEMENT FOR A WHEEL SET FOR A SELF-PROPELLED HARVESTER
RAIDISSEUR DE CHÂSSIS DE MOISSONNEUSE AUTOMOTRICE

(30) Priorität: 09.09.2016 DE 102016116921
(43) Veröffentlichungstag der Anmeldung: 14.03.2018
(73) Patentinhaber: CLAAS Selbstfahrende Erntemaschinen GmbH, 33428 Harsewinkel (DE)
(72) Erfinder: Dopheide, Gregor, 33775 Versmold (DE); Uesbeck, Tobias, 48599 Gronau-Epe (DE); Rieping, Andreas, 48317 Rinkerode (DE); Schilder, Frank, 33604 Bielefeld (DE)
(74) Vertreter: CLAAS Gruppe

(56) Entgegenhaltungen:
- DE-A1- 19 535 443
- DE-C1- 4 425 635
- JP-A- 2001 239 968
- JP-A- 2003 003 416
- US-A- 4 304 313

## Beschreibung

Die vorliegende Erfindung betrifft eine Versteifung für ein Fahrwerk einer selbstfahrenden Erntemaschine, das Fahrwerk der selbstfahrenden Erntemaschine sowie die selbstfahrende Erntemaschine.

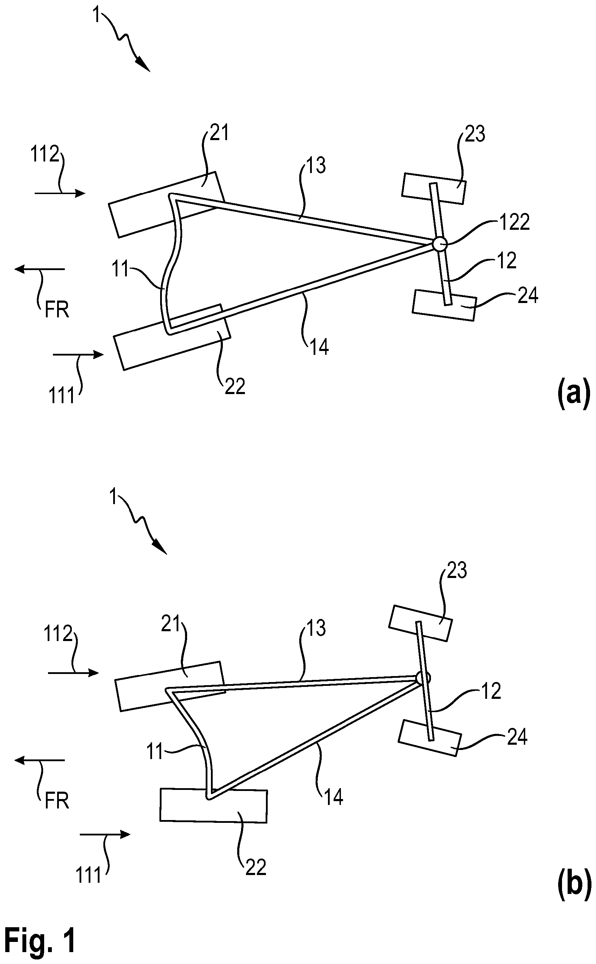

Selbstfahrende Erntemaschinen werden, beispielsweise auf nachgiebigen und/oder nassen Böden, häufig anstelle von Reifen mit Raupen ausgestattet, um ein Einsinken oder Festfahren der Erntemaschine zu vermeiden. Die Raupen können zur Unterstützung und Vereinfachung der Lenkung der Erntemaschine während der Erntefahrt unabhängig voneinander gebremst werden. Beim Abbremsen einer an einer Achse angeordneten Raupe fährt die andere an derselben Achse angeordnete Raupe ungebremst weiter, so dass sich die Erntemaschine um die gebremste Raupe dreht. Die dabei auf die Achse wirkenden Kräfte können zu einer etwa S- förmigen Verbiegung (S- Schlag) der Achse führen. Diesen Lastfall der Einzelradbremse zeigt die Fig. 1 (a) schematisch. Auch ein Blockieren einer von der versteiften Achse beabstandeten zweiten Achse kann zu einer solchen etwa S- förmigen Verbiegung der Achse führen. Dies zeigt Fig. 1 (b) schematisch.

Um ein solches Verbiegen der Achse zu verringern, wird das Fahrwerk herkömmlich versteift. Zumeist wird oder werden dafür dem Triebachskörper parallel und zu ihm versetzt eine einzelne Strebe oder zwei einander parallele Streben angeordnet. Die einzelne Strebe oder die einander parallelen Streben nehmen Aufstandskräfte und/oder Beschleunigungs- oder Bremskräfte auf.

Um den Versatz zu realisieren, ist an den Enden des Triebachskörpers jeweils eine Konsole vorgesehen. Die Strebe oder Streben verbinden die Konsolen miteinander. Bei der Verwendung solcher herkömmlicher Streben müssen die Konsolen mit einem zusätzlichen Versteifungsflansch am Triebachskörper angeschweißt werden, um eine ausreichende Steifigkeit des Fahrwerks zu gewährleisten. Die Verwendung von zusätzlichen Flanschen am Triebachskörper erzeugt jedoch eine hohe Komplexität im Produkt- Baukasten. Sie führt zu höheren Kosten und erschwert einen spezifischen Umbau von Kundenmaschinen. Zudem versteifen die herkömmliche Strebe oder Streben das Fahrwerk zwar, so dass das Verbiegen in den oben beschriebenen Lastfällen verringert ist. Sie verhindern es aber nicht.

Die Druckschrift JP2001 239968 A offenbart eine landwirtschaftliche Arbeitsmaschine mit Raupenlaufwerken. Bei der landwirtschaftlichen Arbeitsmaschine der Druckschrift US 4,304,313 sind zwei sich überkreuzende Streben zwischen zwei hinteren Radpaaren angeordnet. Die DE 44 25 635 C1 offenbart ein Selbstfahrmodul für Attrappen zur Darstellung und Bewegung von Gefechtsfahrzeugen mit Raupenlaufwerken, die durch gelenkig miteinander verbundene Kreuzstreben verbunden sind. Die DE 195 35 443 A1 offenbart einen Mähdrescher mit einem Fahrgestellrahmen für Raupenlaufwerke, der vordere und hintere Querträger und sich überkreuzende Kreuzstreben umfasst.

Aufgabe der vorliegenden Erfindung ist es, eine Versteifung für ein Fahrwerk für eine selbstfahrende Erntemaschine bereit zu stellen, durch die das Auftreten einer S- förmigen Verbiegung der Achse im Lastfall "Einzelradbremse" und/oder im Lastfall "blockierende zweite Achse" weiter verringert oder sogar vermieden wird, und die die Verwendung eines herkömmlichen Triebachskörpers, insbesondere ohne einen aufwändig am Triebwerkskörper angebrachten Versteifungsflansch, ermöglicht.

Die Aufgabe wird gelöst mit einer Versteifung für eine selbstfahrende Erntemaschine mit den Merkmalen des unabhängigen Patentanspruchs 1, einem Fahrwerk mit den Merkmalen des unabhängigen Patentanspruchs 7 sowie einer selbstfahrenden Erntemaschine mit den Merkmalen des unabhängigen Patentanspruchs 13. Vorteilhafte Ausführungsformen sind den abhängigen Ansprüchen entnehmbar.

Dafür wird eine Versteifung für ein Fahrwerk für eine selbstfahrende Erntemaschine geschaffen. Die Versteifung weist eine Einzelstrebe auf, die sich entlang einer Strebenachse erstreckt.

Die Versteifung zeichnet sich dadurch aus, dass sie zudem zwei sich überkreuzende Kreuzstreben umfasst.

Die Einzelstrebe ist zum Aufnehmen von Aufstandskräften sowie, in Abhängigkeit von der Anordnung der Raupenlaufwerke am Triebachskörper, von Kräften beim Beschleunigen und/oder Bremsen vorgesehen. Sie kann zwar ein etwa S- förmiges Verbiegen einer mit der Versteifung versteiften Achse verringern aber nicht verhindern. Die Kreuzstreben hingegen nehmen Kräfte im Lastfall "Einzelradbremse" und/oder im Lastfall "blockierende zweite Achse" auf. Sie verringern dadurch ein etwa S- förmiges Verbiegen der mit ihr versteiften Achse oder verhindern es sogar.

Aufgrund der Anzahl der zur Versteifung verwendeten Streben, insbesondere drei Streben, können die Streben klein dimensioniert werden, und insbesondere einen kleinen Durchmesser oder eine geringe Stärke aufweisen. Dadurch wird im Bereich der Versteifung Bauraum eingespart, der für andere Bauteile der Erntemaschine nutzbar ist. Zudem ist die Bodenfreiheit größer. Durch effizienten Materialeinsatz können außerdem Kosten und Gewicht eingespart werden.

Die Kreuzstreben sind bevorzugt in einer radialen Richtung der Strebenachse zur Einzelstrebe versetzt angeordnet. Hierbei erstrecken sich die Kreuzstreben und die Einzelstrebe in einer Ebene. Dabei ist es weiterhin bevorzugt, dass die Kreuzstreben insbesondere unmittelbar übereinander angeordnet sind. In Richtung quer zur Ebene sind sie daher nahezu nicht oder sogar gar nicht voneinander beabstandet. Die Anordnung der Einzelstrebe und der Kreuzstreben ist in Bezug auf den benötigten Bauraum und die Bodenfreiheit vorteilhaft. In Abhängigkeit von der Positionierung des Raupenlaufwerks am Triebachskörper ist aber auch eine Anordnung der Einzelstrebe oberhalb oder unterhalb der Kreuzstreben und/oder zueinander versetzt bevorzugt. Zudem kann die Versteifung auch mehr als eine Einzelstrebe oder mehr als ein Paar Kreuzstreben umfassen.

Weiterhin ist es bevorzugt, dass die Kreuzstreben gleich lang sind und sich in einem Winkel desselben Betrages in umgekehrte Richtungen zur Strebenachse erstrecken. Ganz besonders bevorzugt sind die Einzelstrebe und die Kreuzstreben spiegelsymmetrisch zu einer Mittellinie angeordnet, die die Einzelstrebe halbiert. Dadurch ist die Lastverteilung auf die Streben symmetrisch, und die Kräfte verteilen sich auf den beiden Seiten der Mittellinie gleichmäßig.

Um eine leichte und schnelle Montage der Versteifung zu ermöglichen, ist es weiterhin bevorzugt, dass die Einzelstrebe und die Kreuzstreben jeweils ein Toleranzausgleichsmittel aufweisen. Das Toleranzausgleichsmittel ermöglicht eine Längenverstellung der Streben.

Die Einzelstrebe und die Kreuzstreben sind bevorzugt an zwei sich in die radiale Strebenrichtung erstreckende, einander parallele Befestigungsleisten, insbesondere lösbar, befestigt. Vorzugsweise sind sie an die Befestigungsleisten angeschraubt. Sie können aber auch an diese genietet oder geschweißt sein. In dieser Ausführungsform ist die Versteifung modular herstellbar und sehr schnell montierbar. Es ist aber ebenfalls eine nicht modulare Montage der Einzelstrebe und der Kreuzstreben während der Fertigung bevorzugt, bei der diese einzeln nacheinander am Fahrwerk montiert werden.

Die Aufgabe wird weiterhin gelöst mit einem Fahrwerk für eine selbstfahrende Erntemaschine mit einer solchen Versteifung. Die zusätzlich zur Einzelstrebe verwendeten Kreuzstreben verringern eine etwa S-förmige Verbiegung der mit der Versteifung versteiften Achse erheblich oder verhindern sie sogar, insbesondere in den Lastfällen "Einzelradbremse" und "blockierende zweite Achse".

Das Fahrwerk umfasst bevorzugt zudem einen ersten Triebachskörper und einen zweiten Triebachskörper sowie zwei Längsstreben. Dabei ist es weiterhin bevorzugt, dass die Längsstreben den ersten Triebachskörper und den zweiten Triebachskörper miteinander verbinden.

Die Versteifung ist bevorzugt zwischen zwei Konsolen, die an offenen Enden eines der Triebachskörper angeordnet sind, angeordnet. Vorzugsweise sind die Einzelstrebe sowie die Kreuzstreben lösbar an den Konsolen befestigt. Die Konsolen sind bevorzugt am Triebachskörper angeflanscht. Dabei ist ein aufwändiges Anschweißen eines Versteifungsflansches an den Triebachskörper nicht erforderlich, da die Versteifung das Fahrwerk, insbesondere in den Lastfällen "Einzelradbremse" und "blockierende zweite Achse", ausreichend versteift. Es kann daher für die mit der Versteifung versteifte Achse ein herkömmlicher Triebachskörper verwendet werden.

Dabei ist es besonders bevorzugt, dass der erste Triebachskörper eine Vorderachse und der zweite Triebachskörper eine Hinterachse bildet. Die Versteifung ist bevorzugt am ersten Triebachskörper, d. h. an der Vorderachse, vorgesehen. Die Erfindung umfasst aber auch ein Fahrwerk mit einer solchen an der Hinterachse angeordneten Versteifung, oder ein Fahrwerk, bei dem sowohl die Vorderachse als auch die Hinterachse und/oder weitere Achsen eine solche Versteifung aufweisen.

In einer besonders bevorzugten Ausführungsform ist der zweite Triebachskörper, d. h. die Hinterachse, pendelnd gelagert. Dabei ist es zudem bevorzugt, dass sich die Längsstreben jeweils von einem der Enden des ersten Triebachskörpers oder einer der Konsolen zum Pendellager des zweiten Triebachskörpers erstrecken. Die Erfindung umfasst aber auch ein Fahrwerk mit einem nicht pendelnd, insbesondere an zwei Lagern, gelagerten zweiten Triebachskörper. Bei einer solchen Lagerung ist es bevorzugt, dass sich die Längsstreben jeweils von einem der Enden des ersten Triebachskörpers oder einer der Konsolen zu einem der Enden des zweiten Triebachskörpers oder einer dort vorgesehenen Konsole erstrecken.

Die Einzelstrebe und die Kreuzstreben der Versteifung können zudem vorgespannt sein.

Gegenüber einer oder zwei zum Triebachskörper parallel angeordneten herkömmlichen Strebe oder Streben kann durch die Versteifung mit den beiden zusätzlichen Kreuzstreben auf ein zusätzliches Versteifen durch Anschweißen der Konsole an den Triebachskörper verzichtet werden. Die Montage des Fahrwerks ist dadurch weniger aufwändig und schneller durchführbar. Weiterhin kann ein herkömmlicher Triebachskörper verwendet werden.

Die Aufgabe wird weiterhin gelöst mit einer selbstfahrenden Erntemaschine mit einem solchen Fahrwerk. Das Fahrwerk ist bevorzugt sowohl für Raupenfahrzeuge als auch für Reifenfahrzeuge verwendbar. Dafür können an der mit der Versteifung versteiften Achse, insbesondere an der Vorderachse, alternativ entweder Raupenlaufwerke oder Reifen angeordnet werden.

Besonders bevorzugt ist die selbstfahrende Erntemaschine ein Mähdrescher. Die Erfindung ist aber nicht auf Mähdrescher beschränkt, sondern auch für andere selbstfahrende Erntemaschinen, insbesondere Feldhäcksler, Rübenroder oder weitere Erntemaschinen, aber auch Traktoren verwendbar. Zudem ist die Versteifung auch zur Versteifung eines mehrachsigen Fahrwerks eines Anhängegerätes wie beispielsweise einer Ballenpresse verwendbar.

Die vorliegende Erfindung wird nachstehend anhand von Figuren beschrieben. Die Figuren sind lediglich beispielhaft und schränken den allgemeinen Erfindungsgedanken nicht ein. Es zeigen:
- Fig. 1: in (a) und (b) jeweils schematisch ein Fahrwerk in einem Lastfall;
- Fig. 2: in (a) eine erfindungsgemäße Versteifung, die zwischen zwei Konsolen angeordnet ist, in einer Ansicht von unten, in (b) die Versteifung der Fig. 2 (a) in einer vereinfachten Darstellung mit den beiden Abstandelementen, wobei die Konsolen an einem Triebachskörper angeordnet sind, in einer Ansicht von unten, und in (c) die Fig. 2 (b) in einer perspektivischen Ansicht; und
- Fig. 3: eine Vorderachse einer selbstfahrenden Erntemaschine, die mit der Versteifung versteift ist, und an der an einem Ende beispielhaft ein Raupenlaufwerk angeordnet ist.

Fig. 1 (a) zeigt ein Fahrwerk 1 für eine selbstfahrende Erntemaschine (nicht gezeigt) schematisch im Lastfall "blockierende zweite Achse". Das Fahrwerk 1 umfasst einen ersten Triebachskörper 11, der eine Vorderachse bildet, einen zweiten Triebachskörper 12, der eine Hinterachse bildet, sowie zwei Längsstreben 13, 14, die den ersten Triebachskörper 11 und den zweiten Triebachskörper 12 miteinander verbinden. Im Folgenden werden die Begriffe erster Triebachskörper 11 und Vorderachse, sowie zweiter Triebachskörper 12 und Hinterachse synonym verwendet.

An gegenüberliegenden Enden (nicht bezeichnet) der Hinterachse 12 sind jeweils Reifen 23, 24, und an gegenüberliegenden Enden 111, 112 der Vorderachse 11 jeweils Raupenlaufwerke 21, 22 angeordnet. Der Pfeil FR zeigt die Fahrtrichtung der Erntemaschine bei Vorwärtsfahrt.

Die Hinterachse 12 ist pendelnd gelagert. Dafür ist mittig der Hinterachse 12 ein Pendellager 122, insbesondere an einem Rahmen (nicht gezeigt) der Erntemaschine, vorgesehen. Die Vorderachse 11 ist jeweils an den gegenüberliegenden Enden 111, 112 des Triebachskörpers 11, insbesondere am Rahmen der Erntemaschine, gelagert. Die Längsstreben 13, 14 erstrecken sich von gegenüberliegenden Enden 111, 112 des ersten Triebachskörpers 11 zum Pendellager 122 des zweiten Triebachskörpers 12.

Dargestellt ist in Fig. 1 (a) der Lastfall, bei dem bei Kurvenfahrt auf ein in Fahrtrichtung FR rechtes Hinterrad 23 eine seitliche Querkraft wirkt, die beispielsweise durch ein Anlaufen einer Spur im Feld oder an einem Damm entstehen kann. Die dabei wirkenden Kräfte (nicht gezeigt) führen zu einer S- förmigen Verbiegung der Vorderachse 11.

Fig. 1 (b) zeigt den Lastfall der "Einzelradbremse", wobei hier das in Fahrtrichtung FR linke Raupenlaufwerk 22 abgebremst wird. Dieser Lastfall wird beispielsweise zum unterstützenden Lenken bei der Erntefahrt genutzt. Durch das Abbremsen dreht sich das Fahrwerk 1 um das linke Raupenlaufwerk 22. Auch diese Belastung führt zu einer S-förmigen Verbiegung der Vorderachse 11.

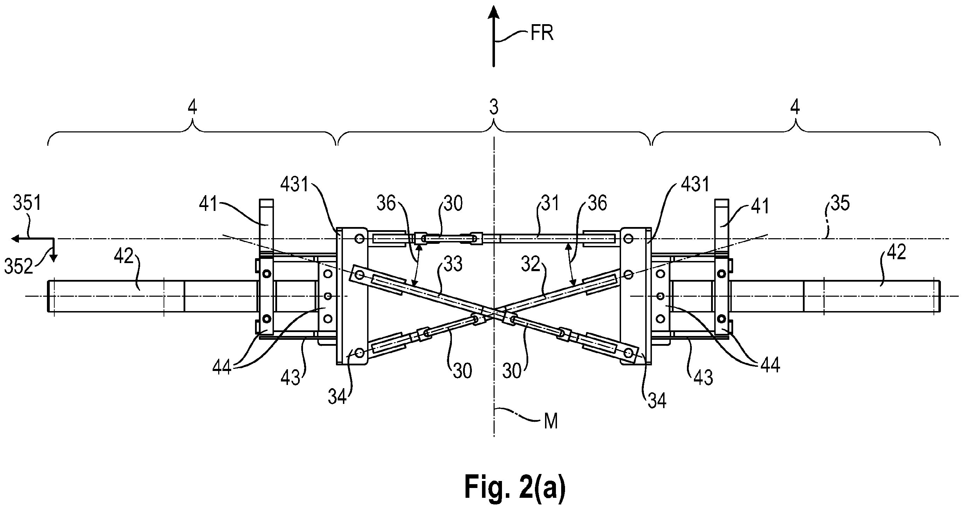

Um ein solches Verbiegen zu verringern oder sogar zu vermeiden, ist am Fahrwerk 1 eine Versteifung 3 vorgesehen. Die Versteifung 3 ist in Fig. 2 (a) gezeigt.

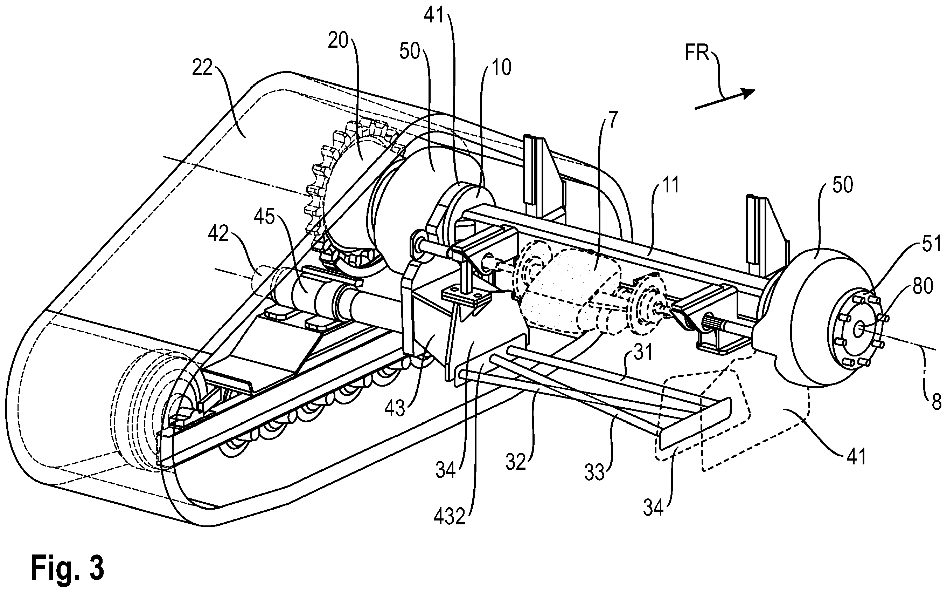

Die Versteifung 3 ist hier für die Vorderachse 11 vorgesehen. Bei der hier dargestellten Ausführungsform ist sie unterhalb des ersten Triebachskörper 11 und geringfügig gegen die Fahrtrichtung FR zu diesem versetzt angeordnet. In Abhängigkeit von der Anordnung eines Rades (nicht gezeigt) eines Reifens (nicht gezeigt) oder eines Antriebsrades 20 (s. Fig. 3) eines Raupenlaufwerks 22, 23 (s. Fig. 3) kann sie aber auch anders angeordnet sein.

Die Versteifung 3 ist zwischen zwei Konsolen 4 angeordnet und befestigt, die an den Enden 111, 112 des ersten Triebachskörpers 11 angeordnet sind. Sie versteift den ersten Triebachskörper 11 ausreichend, so dass die Konsolen 4 nicht, beispielsweise mit Zusatzkonsolen oder Klammern, an den Triebachskörper 11 angebunden werden müssen. Dadurch kann ein herkömmlicher Triebachskörper für die Vorderachse 11 verwendet werden.

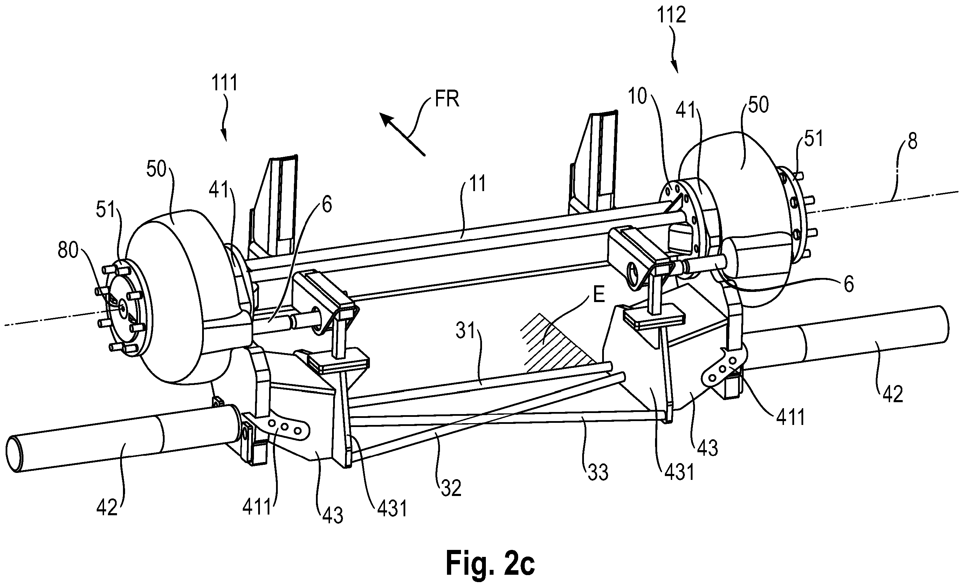

Die Versteifung 3 weist eine Einzelstrebe 31 sowie zwei sich überkreuzende Kreuzstreben 32, 33 auf. Die Einzelstrebe 31 erstreckt sich entlang einer Strebenachse 35. Die Kreuzstreben 32, 33 sind in einer radialen Richtung 352 der Strebenachse 35 zur Einzelstrebe 31 versetzt angeordnet. Sie sind weiterhin unmittelbar übereinander angeordnet, so dass sie nahezu nicht oder gar nicht voneinander beabstandet sind. Dadurch sind die Einzelstrebe 31 und die Kreuzstreben 32, 33 in einer Ebene E (s. Fig. 2 (c)) angeordnet.

Mit der Einzelstrebe 31 werden Aufstandskräfte, Bremsmomente und Beschleunigungsmomente abgefangen. In den Lastfällen "Einzelradbremse" und "blockierende zweite Achse" wirken vor allem die Kreuzstreben 32, 33 versteifend. Sie verringern dann ein S- förmiges Verbiegen der Vorderachse 11 oder verhindern dieses.

Die Kreuzstreben 32, 33 sind gleich lang. Zudem erstrecken sie sich in einem Winkel 36 zur Einzelstrebe 31, der denselben Betrag aufweist, jedoch in umgekehrte Richtungen. Der Winkel 36 liegt bevorzugt im Bereich 10°―50°, ins besondere bei etwa 25°. Zudem ist die Versteifung 3 zu einer Mittellinie M, die die Einzelstrebe 31 halbiert, spiegelsymmetrisch ausgebildet. Dadurch verteilen sich auf die Versteifung wirkende Kräfte gleichmäßig.

Die Einzelstrebe 31 und die Kreuzstreben 32, 33 sind mit offenen Enden (nicht bezeichnet) an zwei Befestigungsleisten 34 festgelegt. Die Befestigungsleisten 34 sind parallel zueinander, insbesondere quer zur Strebenachse 35, angeordnet. Sie erstrecken sich in der Ebene E. Sie sind aus einem ebenen Flachbandmaterial, insbesondere einem Blech, gelasert oder gestanzt. Dadurch sind sie kostengünstig herstellbar. Die Einzelstrebe 31 und die Kreuzstreben 32, 33 sind ebenfalls aus einem solchen ebenen Flachbandmaterial herstellbar. Bevorzugt wird jedoch ein Vollrohr oder ein Hohlrohr verwendet.

Die Einzelstrebe 31 und die Kreuzstreben 32, 33 weisen zudem jeweils ein Toleranzausgleichsmittel 30 auf, das die Montage der Versteifung 3 vereinfacht. Das Toleranzausgleichsmittel 30 ermöglicht einen Längenausgleich der Einzelstrebe 31 oder der Kreuzstreben 32, 33.

Die Konsolen 4, zwischen denen die Versteifung 3 angeordnet ist, sind spiegelsymmetrisch zur Mittellinie M angeordnet. Sie werden daher im Folgenden anhand einer einzelnen Konsole 4 beschrieben.

Die Konsole 4 weist eine Trägerplatte 41 auf, die an ein Ende des ersten Triebachskörpers 11 anflanschbar ist. Zudem weist die Konsole 4 einen Abstandskörper 43 auf, der an einer dem ersten Triebachskörper 11 zugewandten Seite (nicht bezeichnet) der Trägerplatte 41 angeordnet ist. Der Abstandkörper 43 ist durch eine Wand 431, die sich parallel der Trägerplatte 41 erstreckt und von dieser beabstandet ist, begrenzt.

Die Trägerplatte 41 ist zum Lagern eines Raupenlaufwerks 21, 22 vorgesehen. Dafür umfasst die Konsole 4 eine Steckachse 80, die den Abstandskörper 43 durchsetzt. Die Steckachse 80 erstreckt sich parallel der Einzelstrebe 31 und quer zur Trägerplatte 41. Sie ist mittels eines Klemmbügels 44 an der Trägerplatte 41 befestigt. Zudem ist ein weiterer Klemmbügel 44 an der Wand 431 angeordnet, der ein Lösen der Steckachse 80 von der Trägerplatte 41 verhindert. Der weitere Klemmbügel 44 ist dafür mit der Wand 431 verschweißt. Dadurch bilden die Trägerplatte 41 und der weitere Klemmbügel 44 eine Aufstandsfläche in Hauptkraftrichtung.

Jeweils eine der Befestigungsleisten 34 der Versteifung 3 ist an der Wand 431 des Abstandskörpers 43 befestigt. Dadurch sind die an den Enden 111, 112 des ersten Triebachskörpers 11 angeordneten Konsolen 4 durch die Versteifung 3 miteinander verbunden.

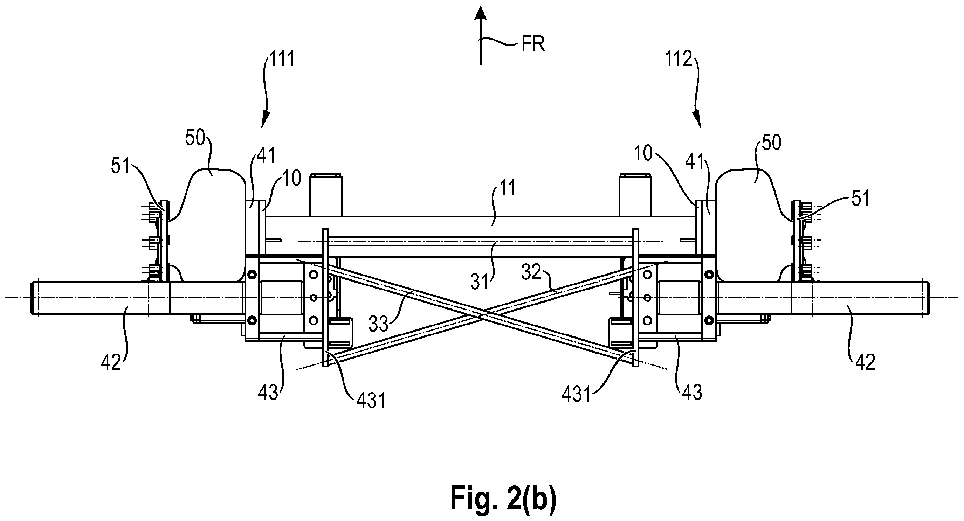

In den Fig. 2 (b) und (c) ist gegenüber der Darstellung der Fig. 2 (a) zusätzlich der erste Triebachskörper 11 dargestellt. Die Befestigungsleisten 34 der Versteifung 3 sowie die Toleranzausgleichsmittel 30 sind der Übersichtlichkeit halber hier nicht gezeigt.

Sichtbar sind in Fig. 2 (c) die Anordnung der Einzelstrebe 31 und der Kreuzstreben 32, 33 in der Ebene E, sowie die unmittelbar übereinander vorgesehene Anordnung der sich überkreuzenden Kreuzstreben 32, 33. Zudem ist die von dem ersten Triebachskörper 11 in der Höhe beabstandete Positionierung der Versteifung 3 dargestellt. In Fig. 2 (b) ist erkennbar, dass die Einzelstrebe 31 unterhalb des ersten Triebachskörpers 11 angeordnet ist. Die Einzelstrebe 31 kann aber auch anders positioniert sein.

An den Enden 111, 112 des ersten Triebachskörpers 11 ist jeweils ein Achsflansch 10 zum Anflanschen der Trägerplatte 41 einer der Konsolen 4 angeordnet. Der Achsflansch 10 ist hier stoffschlüssig am ersten Triebachskörper 11 befestigt, insbesondere angeschweißt. Die Trägerplatte 41 ist lösbar, insbesondere mittels Schrauben, am Achsflansch 10 festgelegt. Die Trägerplatte 41 weist zudem einen Haltesteg 411 (s. Fig. 2 (c)) auf, der zum Befestigen jeweils einer der Längsstreben 13, 14 des Fahrwerks 1 vorgesehen ist.

An der dem ersten Triebachskörper 11 abgewandten Seite der Trägerplatte 41 ist jeweils ein Achsendabtrieb 50 angebaut. Ein Antriebsrad 20 (Turas, s. Fig. 3) des Raupenlaufwerks 21, 22 oder ein Rad (nicht gezeigt) eines Reifens (nicht gezeigt) ist an einen daran befestigten Radflansch 51 anflanschbar. Der Radflansch 51 ist an der dem ersten Triebachskörper 11 abgewandten Seite (nicht bezeichnet) des Achsendabtriebs 50 angeordnet. Die Steckachse 80 oder ein Teil (nicht bezeichnet) der Steckachse 80 ist zum Befestigen des Rades des Reifens abnehmbar vorgesehen.

Der Achsendabtrieb 50 sowie der Radflansch 51 erstrecken sich konzentrisch um eine Triebachse 8. Der Achsendabtrieb 50 ist insbesondere zum Untersetzen der Drehzahl eines Antriebsmotors (nicht gezeigt), insbesondere eines Verbrennungsmotors, vorgesehen.

Er weist eine Antriebswelle 6 auf, die sich konzentrisch zu einer Abtriebswelle (nicht bezeichnet) einer Antriebs- und/oder Schaltgetriebeeinheit 7 erstreckt. Die Antriebs- und/oder Schaltgetriebeeinheit 7 zeigt Fig. 3. Fig. 3 zeigt zudem ein an das eine Ende 111 des Triebachskörpers 11 angebautes Raupenlaufwerk 22. Ein am gegenüber liegenden Ende angebautes Raupenlaufwerk 23 ist der Übersichtlichkeit halber nicht dargestellt.

Die Antriebswelle 6 des Achsendabtriebs 50 ist mit der Abtriebswelle der Antriebs- und/oder Schaltgetriebeeinheit 7 drehfest verbunden. Die Antriebs- und/oder Schaltgetriebeeinheit 7 wird von dem Verbrennungsmotor aus angetrieben. Sie umfasst ein vorzugsweise hydromotorisch angetriebenes Schaltgetriebe (nicht gezeigt) und kann zudem ein Bremsgetriebe (nicht gezeigt) umfassen.

Abtriebsseitig weist der Achsendabtrieb 50 eine Triebwelle 80 auf, die sich konzentrisch um die Triebachse 8 erstreckt. Die Triebwelle 80 durchsetzt den Radflansch 51. Mit der Triebwelle 80 ist entweder das Rad des Reifens oder das Antriebsrad 20 des Raupenlaufwerks 22, 23 drehfest verbindbar. Die Triebwelle 80 treibt daher den Reifen oder das Raupenlaufwerk 22, 23 an.

Die Konsolen 4 sind mit der Versteifung 3 miteinander verbunden. Die Versteifung 3 ist hier unterhalb der Antriebs- und/oder Schaltgetriebeeinheit 7 angeordnet. Aufgrund der geringen erforderlichen Durchmesser (nicht bezeichnet) der Einzelstrebe 31 und der Kreuzstreben 32, 33 steht nun für die Antriebs- und/oder Schaltgetriebeeinheit 7 mehr Bauraum zur Verfügung. Außerdem ist die Bodenfreiheit größer.

### Bezugszeichenliste

- 1: Fahrwerk
- 10: Achsflansch
- 11: Vorderachse, erster Triebachskörper
- 111, 112: Enden des ersten Triebachskörpers
- 12: Hinterachse, zweiter Triebachskörper
- 122: Pendellager
- 13, 14: Längsstreben
- 20: Antriebsrad, Turas
- 21, 22: Raupenlaufwerk
- 23, 24: Reifen
- 3: Versteifung
- 30: Toleranzausgleichsmittel, Verlängerung
- 31: Einzelstrebe
- 32, 33: Kreuzstrebe
- 34: Befestigungsleiste
- 35: Strebenachse
- 351: Axiale Richtung der Strebenachse
- 352: Radiale Richtung der Strebenachse
- 36: Winkel
- 4: Konsole
- 41: Trägerplatte
- 411: Haltesteg
- 42: Steckachse
- 43: Abstandskörper
- 431: Wand
- 44: Klemmbügel
- 45: Lager
- 50: Achsendabtrieb
- 51: Radflansch
- 6: Antriebswelle
- 7: Antriebs- und/oder Schaltgetriebeeinheit
- 8: Triebachse
- 80: Triebwelle
- FR: Fahrtrichtung
- M: Mittellinie
- E: Ebene

## Patentansprüche

1. Versteifung (3) für ein Fahrwerk (1) für eine selbstfahrende Erntemaschine, mit einer Einzelstrebe (31), die sich entlang einer Strebenachse (35) erstreckt,
**dadurch gekennzeichnet, dass**
die Versteifung (3) zudem zwei sich überkreuzende Kreuzstreben (32, 33) umfasst, wobei sich die Kreuzstreben (32, 33) und die Einzelstrebe (31) in einer Ebene (E) erstrecken.

2. Versteifung (3) nach Anspruch 1, **dadurch gekennzeichnet, dass** die Kreuzstreben (32, 33) in einer radialen Richtung (352) der Strebenachse (35) zur Einzelstrebe (31) versetzt angeordnet sind.

3. Versteifung (3) nach einem der vorherigen Ansprüche, **dadurch gekennzeichnet, dass** die Kreuzstreben (32, 33) gleich lang sind und sich in einem Winkel (36) desselben Betrages in umgekehrte Richtungen zur Strebenachse (35) erstrecken.

4. Versteifung (3) nach einem der vorherigen Ansprüche, **dadurch gekennzeichnet, dass** die Einzelstrebe (31) und die Kreuzstreben (32, 33) spiegelsymmetrisch zu einer Mittellinie (M) angeordnet sind.

5. Versteifung (3) nach einem der vorherigen Ansprüche, **dadurch gekennzeichnet, dass** die Einzelstrebe (31) und die Kreuzstreben (32, 33) jeweils ein Toleranzausgleichsmittel (30) aufweisen.

6. Versteifung (3) nach einem der vorherigen Ansprüche, **dadurch gekennzeichnet, dass** die Einzelstrebe (31) und die Kreuzstreben (32, 33) an zwei sich in die radiale Strebenrichtung (352) erstreckende, einander parallele Befestigungsleisten (34) befestigt sind.

7. Fahrwerk (1) für eine selbstfahrende Erntemaschine mit einer Versteifung (3) nach einem der vorherigen Ansprüche.

8. Fahrwerk (1) nach Anspruch 7, **dadurch gekennzeichnet, dass** es zudem einen ersten Triebachskörper (11) und einen zweiten Triebachskörper (12) sowie zwei Längsstreben (13, 14) umfasst, wobei die Längsstreben (13, 14) den ersten Triebachskörper (11) und den zweiten Triebachskörper (12) miteinander verbinden.

9. Fahrwerk (1) nach Anspruch 8, **dadurch gekennzeichnet, dass** die Versteifung (3) am ersten Triebachskörper (11) vorgesehen ist.

10. Fahrwerk (1) nach einem der Ansprüche 8―9, **dadurch gekennzeichnet, dass** der erste Triebachskörper (11) eine Vorderachse und der zweite Triebachskörper (12) eine Hinterachse bildet.

11. Fahrwerk (1) nach einem der Ansprüche 8 - 10, **dadurch gekennzeichnet, dass** der zweite Triebachskörper (12) pendelnd gelagert ist, und sich die Längsstreben (13, 14) von den Enden (111, 112) des ersten Triebachskörpers (11) zum Pendellager (122) des zweiten Triebachskörpers (12) erstrecken.

12. Fahrwerk (1) nach einem der Ansprüche 7 ― 11, **dadurch gekennzeichnet, dass** die Einzelstrebe (31) und die Kreuzstreben (32, 33) der Versteifung (3) vorgespannt sind.

13. Selbstfahrende Erntemaschine, insbesondere Mähdrescher, mit einem Fahrwerk (1) nach einem der Ansprüche 7―12.

14. Selbstfahrende Erntemaschine nach Anspruch 13, **dadurch gekennzeichnet, dass** sie ein Mähdrescher ist.

## Claims

1. A reinforcement (3) for a chassis (1) of a self-propelled harvesting machine, with an individual strut (31) which extends along a strut axis (35),
**characterized in that**
the reinforcement (3) additionally comprises two intersecting cross struts (32, 33), wherein the cross struts (32, 33) and the individual strut (31) extend in a plane (E).

2. The reinforcement (3) according to claim 1, **characterized in that** the cross struts (32, 33) are offset to the individual strut (31) in a direction (352) which is radial to the strut axis (35).

3. The reinforcement (3) according to one of the preceding claims, **characterized in that** the cross struts (32, 33) are identical in length and extend in opposite directions to the strut axis (35) at the same angle (36).

4. The reinforcement (3) according to one of the preceding claims, **characterized in that** the individual strut (31) and the cross struts (32, 33) are disposed with mirror symmetry with respect to a centre line (M).

5. The reinforcement (3) according to one of the preceding claims, **characterized in that** the individual strut (31) and the cross struts (32, 33) each include a tolerance compensation means (30).

6. The reinforcement (3) according to one of the preceding claims, **characterized in that** the individual strut (31) and the cross struts (32, 33) are mounted on two mounting bars (34) which extend in the radial direction (352) of the strut and are parallel to each other.

7. A chassis (1) for a self-propelled harvesting machine, with a reinforcement (3) according to one of the preceding claims.

8. The chassis (1) according to claim 7, **characterized in that** it additionally comprises a first drive axle structure (11) and a second drive axle structure (12) as well as two lengthwise struts (13, 14), wherein the lengthwise struts (13, 14) connect the first drive axle structure (11) and the second drive axle structure (12) together.

9. The chassis (1) according to claim 8, **characterized in that** the reinforcement (3) is provided on the first drive axle structure (11).

10. The chassis (1) according to claim 8 or claim 9, **characterized in that** the first drive axle structure (11) forms a front axle and the second drive axle structure (12) forms a rear axle.

11. The chassis (1) according to one of claims 8 to 10, **characterized in that** the second drive axle structure (12) is float-mounted, and the lengthwise struts (13, 14) extend from the ends (111, 112) of the first drive axle structure (11) to the self-aligning bearing (122) of the second drive axle structure (12).

12. The chassis (1) according to one of claims 7 to 11, **characterized in that** the individual strut (31) and the cross struts (32, 33) of the reinforcement (3) are pre-stressed.

13. A self-propelled harvesting machine, in particular a combine harvester, with a chassis (1) according to one of claims 7 to 12.

14. The self-propelled harvesting machine according to claim 13, **characterized in that** it is a combine harvester.

## Revendications

1. Raidisseur (3) pour un châssis (1) d'une machine de récolte automotrice, comprenant un bras individuel (31) qui s'étend le long d'un axe de bras (35), **caractérisé en ce que** le raidisseur (3) inclut en outre deux entretoises croisées (32, 33), les entretoises (32, 33) et le bras individuel (31) s'étendant dans un plan (E).

2. Raidisseur (3) selon la revendication 1, **caractérisé en ce que** les entretoises (32, 33) sont disposées de manière décalée par rapport au bras individuel (31) dans une direction radiale (352) de l'axe de bras (35) .

3. Raidisseur (3) selon une des revendications précédentes, **caractérisé en ce que** les entretoises (32, 33) sont de longueur égale et s'étendent selon un angle (36) de même valeur dans des directions opposées par rapport à l'axe de bras (35).

4. Raidisseur (3) selon une des revendications précédentes, **caractérisé en ce que** le bras individuel (31) et les entretoises (32, 33) sont disposées avec une symétrie en miroir par rapport à une ligne médiane (M).

5. Raidisseur (3) selon une des revendications précédentes, **caractérisé en ce que** le bras individuel (31) et les entretoises (32, 33) comportent respectivement un moyen de compensation de tolérances (30).

6. Raidisseur (3) selon une des revendications précédentes, **caractérisé en ce que** le bras individuel (31) et les entretoises (32, 33) sont fixés à deux barres de fixation parallèles entre elles (34) qui s'étendent dans la direction radiale de bras (352).

7. Châssis (1) pour une machine de récolte automotrice, comprenant un raidisseur (3) selon une des revendications précédentes.

8. Châssis (1) selon la revendication 7, **caractérisé en ce qu'**il inclut en outre un premier corps d'essieu moteur (11) et un second corps d'essieu moteur (12) ainsi que deux bras longitudinaux (13, 14), les bras longitudinaux (13, 14) reliant le premier corps d'essieu moteur (11) et le second corps d'essieu moteur (12) entre eux.

9. Châssis (1) selon la revendication 8, **caractérisé en ce que** le raidisseur (3) est prévu sur un premier corps d'essieu moteur (11).

10. Châssis (1) selon une des revendications 8―9, **caractérisé en ce que** le premier corps d'essieu moteur (11) forme un essieu avant, et le second corps d'essieu moteur (12), un essieu arrière.

11. Châssis (1) selon une des revendications 8―10, **caractérisé en ce que** le second corps d'essieu moteur (12) est monté oscillant, et les bras longitudinaux (13, 14) s'étendent des extrémités (111, 112) du premier corps d'essieu moteur (11) jusqu'à l'appui oscillant (122) du second corps d'essieu moteur (12).

12. Châssis (1) selon une des revendications 7―11, **caractérisé en ce que** le bras individuel (31) et les entretoises (32, 33) du raidisseur (3) sont précontraints.

13. Machine de récolte automotrice, en particulier moissonneuse-batteuse, comprenant un châssis (1) selon une des revendications 7―12.

14. Machine de récolte automotrice selon la revendication 13, **caractérisée en ce qu'**elle est une moissonneuse-batteuse.
